# EUROPEAN PATENT APPLICATION

(11) **EP 4 686 409 A1**
(43) Date of publication of application: **04.02.2026**
(21) Application number: 24191781.4
(22) Date of filing: 30.07.2024
(51) Int. Cl.: A01N 63/30, A01N 25/26, A01P 13/02

(54) **A KIT AND APPLICATION METHOD FOR THE ECO-SUSTAINABLE BIOLOGICAL CONTROL OF AILANTHUS ALTISSIMA**

(71) Applicant: Università di Pisa, 56126 Pisa (IT)
(72) Inventor: Nali, Cristina, Pisa (IT); Lorenzini, Giacomo, Livorno (IT)
(74) Representative: Di Giovine, Paolo

(57) **Abstract**

The present invention relates to water-soluble capsules, filled with seeds of an herbaceous plant such as, for example, alfalfa (*Medicago sativa*) inoculated with a liquid culture of a microfungus of the species *Verticillium dahliae*, as well as a kit that includes the capsule and a method for the application of said capsules for the natural elimination of the invasive *Ailanthus altissima* tree.

## Description

### TECHNICAL FIELD OF THE INVENTION

The present invention relates to water-soluble capsules, filled with seeds of an herbaceous plant, such as, for example, alfalfa (*Medicago sativa*) inoculated with a liquid culture of a microfungus of the species *Verticillium dahliae,* as well as a kit that includes the capsule and a method for the application of said capsules for the natural elimination of the invasive tree species ailanthus.

### BACKGROUND OF THE INVENTION

*Ailanthus altissima* (hereinafter referred to as 'ailanthus' for short) is a tree native to the Far East, which has long been permanently rooted in Europe and other continents. It is a deadly invader. It has excellent biological performances: large in size, early and massive fruiting (the female individual produces thousands of seeds, which fly even at a distance); differentiates suckers from roots; releases allelopathic substances from the roots that inhibit other plants; almost all herbivorous animals reject it. In other words, if left undisturbed it colonizes abandoned areas, road/railway edges, but also areas of naturalistic and archaeological interest, industrial sites; it can cause allergic reactions in humans. It represents a dramatic ecological problem, for example, in the islands of the Tuscan Archipelago. It is also a threat to biodiversity: where it settles, it quickly takes over to the detriment of local plant populations, and is harmful to buildings (e.g. walls, underground technological services), which can deteriorate irreparably. Since 2019 it has been present in the List of invasive alien species of the European Union and therefore subjected to restrictions regarding import, reproduction and eradication measures. Active contrasting ailanthus is essential, at least in valuable sites. The mechanical action (cutting at the base with a (chain)saw, or ringing) is totally useless, if not even counterproductive: dozens of shoots (re)start from the roots and in a few months, they return to the starting conditions. Many have attempted chemical treatments, historically relying on Glyphosate (N-phosphonomethyl-glycine), a non-selective systemic chemical herbicide. Glyphosate has long been "under trial" at an international level (doubts about its carcinogenicity), but it cannot be used in areas exposed to the population, and certainly not applicable in protected areas. Furthermore, chemical applications must be repeated over time with economic costs and environmental risks. Therefore, the need to have environmentally friendly control agents capable of definitively eliminating the presence of ailanthus is strongly felt.

### SUMMARY OF THE INVENTION

In order to solve the problems of the prior art, the Authors of the present invention have developed water-soluble capsules, filled with seeds of herbaceous plants inoculated with a liquid culture of the pathogenic microfungus *Verticillium dahliae,* in particular the VdGL16 strain (accession no. MK474459 deposited in GenBank), as well as a kit that includes the capsule and a method for the application of said capsules for the natural elimination of ailanthus.

The capsule of the present invention constitutes a definitive solution to the problem of countering the invasiveness of the invasive tree ailanthus, taking into account the uselessness (but also the danger in terms of resurgence of the infestation) of mechanical interventions and the environmental and regulatory limitations linked to the use of chemical herbicides.

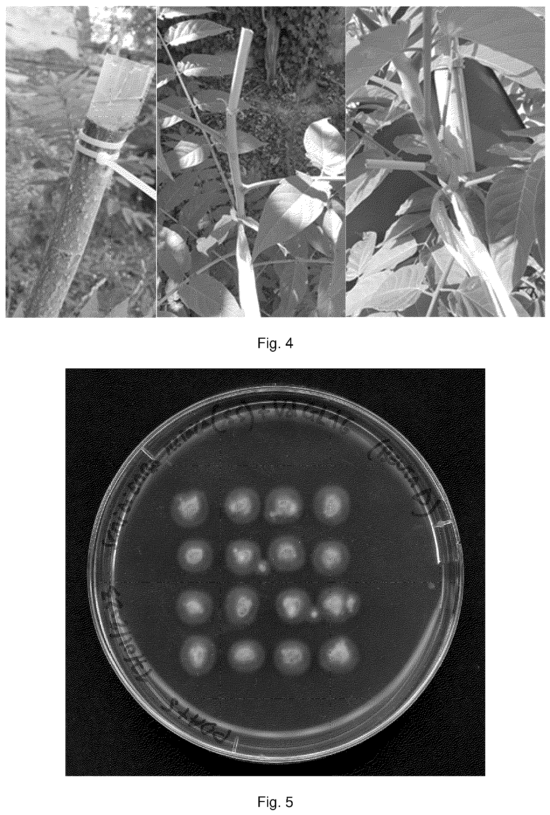

Thanks to the seeds inoculated with a liquid culture of the pathogenic microfungus *Verticillium dahliae,* the Authors surprisingly found that the pathogenic microfungus maintains vitality for at least six months after the preparation of the capsules which is an important advantage, preferably when stored at +4 °C (Fig. 5).

Another advantage of a preferred embodiment of the capsule and the kit of the present invention, wherein the seeds are inoculated with the strain of microfungus *Verticillium dahliae* VdGL16 (accession no. MK474459 deposited in GenBank), is that such strain is able to adapt better to hot climates, allowing it to have notable effectiveness even in areas where higher temperatures occur. This adaptability is crucial in the context of climate change, as it ensures sustained agricultural productivity despite increasing global temperatures. By thriving in hotter conditions, such strains can be of help in regions most affected by climate change, reducing vulnerability to heat stress and drought. This resilience not only stabilizes crop yields but also supports biodiversity by maintaining ecosystems that might otherwise be compromised.

The capsule, the kit and the method described here have been tested for a long time in laboratory conditions, in the greenhouse and in the open air and have proven capable of leading to the death of all treated ailanthus individuals, in a period varying from a few months to a couple of years, depending on the size/age of the treated tree. Despite the high genetic variability existing in the European and Italian ailanthus population, typical of invasive species subject to high rates of genetic exchange due to the continuous introduction of multiple propagules and constant movement, ailanthus plants have shown a very high susceptibility to *V. dahliae,* regardless of origin.

The capsule, the kit and the method of the present invention are presented as very flexible and capable of providing concrete answers to various practical situations, in particular regarding the size of the application target. In fact, in addition to the classic application method relating to trunks of adult plants, or in any case those of an adequate diameter - i.e. perforation with a drill tip and the introduction of the formulation into the hole - it offers innovative solutions regarding small stems (even in the herbaceous phase) and even leaf petioles. In fact, the proposal specifically refers to easy-to-use application protocols that do not require the use of a drill, but simply that of pruning shears. In fact, the method of the invention allows one to operate in such a way as to ensure the penetration of the microbiological principle into the vascular system of the tree through horizontal cuts of the woody tissues, on which a reservoir, such as cylindrical mini-containers, is applied. These can be represented by rigid cardboard tubes (easily available on the market) inserted into the base of the suitably cut petiole, or on the herbaceous stem as well as by strips of plastic material fixed using material bands biodegradable at the 'stump' of the branch. The subsequent 'filling' with the formulation of the volumes of pathogenic load thus obtained allows the easy penetration of the pathogenic germ into the vascular system of the tree, so as to begin the systemic colonization of the entire individual, with consequent death in a matter of weeks/months, depending on its size.

Therefore, object of the present invention is
a water-soluble capsule comprising seeds of an herbaceous plant inoculated with a liquid culture of a microfungus of the species *Verticillium dahlie,*
a kit comprising the water-soluble capsule according to the present invention, a solvent and a container.
the use of the water-soluble capsule according to the present invention or of the kit according to the present invention, as a mycoherbicide,
a method for the preparation of a water-soluble capsule according to the present invention, comprising the following steps:
   i) providing a liquid culture of a microfungus of the species *Verticillium dahliae,*
   ii) inoculation of said liquid culture of a microfungus of the species *Verticillium dahliae* to seeds of an herbaceous plant,
   iii) incubation of said inoculated seed for at least 1 week, preferably at least 2 weeks,
a method for controlling or killing *Ailanthus altissima,* wherein the trunk of said *Ailanthus altissima* has a diameter of at least 4 cm, comprising the following steps:
   i) preparing a suspension of a microfungus of the species *Verticillium dahliae* with the kit according to the present invention or by dissolving in a solvent the water-soluble capsule according to the present invention,
   ii) performing at least one hole in the trunk of said neophytes, preferably 2 or 3 holes,
   iii) adding said suspension prepared in step i) in said hole.
a method for controlling or killing *Ailanthus altissima,* wherein the trunk of said *Ailanthus altissima* has a diameter of less than 4 cm, comprising the following steps:
   i) preparing a suspension of a microfungus of the species *Verticillium dahliae* with the kit according to the present invention or by dissolving in a solvent the water-soluble capsule according to the present invention,
   ii) horizontal cutting of a stem,
   iii) inserting a reservoir on the cut of step ii) comprising the suspension prepared in step i) .

### DETAILED DESCRIPTION OF THE FIGURES

**Fig. 1****.** Left: HPMC microcapsules filled with sterile alfalfa seeds. On the right: HPMC microcapsules filled with alfalfa seeds, inoculated with a liquid culture of the pathogenic microfungus *Verticillium dahliae* and incubated for 21 days.
**Fig. 2****.** Time course of the dissolution kinetics of a HPMC microcapsule immersed in water, without any further intervention. Shaking the container, and possibly by 'teasing' it with a chopstick, in a few minutes the contents pour entirely into the liquid.
**Fig. 3****.** From *left*: the various components of the vial with measuring cap disassembled: in order, reservoir, sample holder capsule, cap, chopper; the complete vial, with and without cap.
**Fig. 4****.** Alternative application methods to the trunk hole.
   On the *left*: cutting at the top of the stem and insertion of a biodegradable plastic band and its fixing with a biodegradable plastic clamp. In the *center*: head cut and application of rigid cardboard (mini)tube. On the *right*: removal of the petiole and insertion of a rigid cardboard (mini)tube at its base.
**Fig. 5****.** Petri dish with agar substrate (PDA = Potato Dextrose Agar) on which alfalfa seeds inoculated six months previously with the microfungus were placed: please note the perfect vegetative growth from each inoculation point. The dish has been maintained at +4 °C.

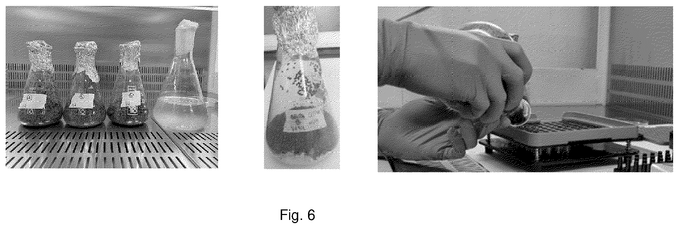

**Fig. 6****.** Photo gallery of the production process of microcapsules filled with inoculated seeds.

### GLOSSARY

Unless otherwise defined herein, scientific, and technical terms used in connection with the present invention shall have the meanings that are commonly understood by those of ordinary skill in the art. Further, unless otherwise required by context, singular terms shall include pluralities and plural terms shall include the singular.

The term "herbaceous plant" according to the present invention refers to a plant that has non-woody stems which die back to the ground at the end of the growing season. These plants typically have a life cycle that can be annual, biennial, or perennial, and they are known for their soft, green, and flexible tissues.

The term "mycoherbicide" according to the present invention refers to a biocontrol agent derived from fungi used to manage and control unwanted vegetation. These fungi specifically target and infect certain unwanted weed plants, leading to their suppression or eradication through natural biological processes.

According to the present invention, "alfalfa" is a perennial flowering plant (*Medicago sativa*) belonging to the Fabaceae family, known for its high nutritional value and commonly used as forage for livestock. It is characterized by its deep root system, trifoliate leaves, and small purple flowers, and it plays a significant role in agriculture due to its ability to fix nitrogen in the soil.

According to the present invention, the microfungus of the species *Verticillium dahliae* is a soil-borne pathogenic fungus that infects a wide range of plant hosts, causing severe wilt disease. This fungus invades the vascular system of plants, leading to symptoms such as yellowing, wilting, and eventual plant death. It is notable for its ability to persist in soil for extended periods, posing challenges for agricultural management and crop production.

The expression "controlling or killing *Ailanthus altissima"* according to the present invention refers to the process of managing, suppressing, or eradicating *Ailanthus altissima.*

In any point of the present specification or of the claims, the expression "comprising" or "comprise(s)" can be replaced by "consisting of" or "consist(s) of".

### DETAILED DESCRIPTION OF THE INVENTION

The present invention relates to a water-soluble capsule comprising seeds of an herbaceous plant inoculated with a liquid culture of a microfungus of the species *Verticilium dahliae.* The sentence "capsule comprising seeds" means also that the capsules are filled completely or just in part, for example at least for the 50-60-70-80-90% with said seeds.

In one embodiment, said microfungus of the species *Verticillium dahliae* is the VdGL16 strain, accession number MK474459 deposited in GenBank.

In one embodiment, said herbaceous plant is alfalfa, clover, millet.

The Authors of the present invention has surprisingly found that by inoculating the seeds of an herbaceous plant with a liquid culture of a microfungus of the species *Verticillium dahliae,* the capsule have proven capable of leading to the death of all treated ailanthus individuals, in a period varying from a few months to a couple of years, depending on the size/age of the treated tree, despite the high genetic variability existing in the European and Italian ailanthus population. Furthermore, the specific strain VdGL16, accession number MK474459 deposited in GenBank, was found to be able to adapt better to hot climates, allowing it to have notable effectiveness even in areas where higher temperatures occur.

In one embodiment the water-soluble capsule is made of a water-soluble polymer. The person skilled in the art knows which natural of synthetic water-soluble polymer is suitable as material for water-soluble capsule. In one preferred embodiment, said water-soluble polymer is cellulose or a derivative thereof, more preferably hydroxypropyl methylcellulose (HPMC).

In one embodiment, said seeds of herbaceous plant inoculated with said liquid culture of the microfungus of the species *Verticillium dahliae* have been incubated for at least 1 week, preferably at least 2 weeks.

In one embodiment, at the start of the incubation, said microfungus of the species *Verticilium dahlie* is in a concentration of at least 1×10⁵ CFU/g of seeds (colony forming units, mainly asexual spores, conidia), preferably ranging from 1×10⁵ CFU/g of seeds to 1×10⁷ CFU/g of seeds. In other words, the quantity of microfungus which allows to inoculate the seeds of herbaceous plant is at least 1×10⁵ CFU/g of seeds.

For example, in one embodiment, at the start of the incubation, preferably in an Erlenmeyer flask, containing for instance 100 g alfalfa seeds and 40 ml sterile distilled water, said microfungus of the species *Verticillium dahliae* is inoculated with 8 ml of a fungal suspension containing 10⁷ cfu (colony forming units, mainly asexual spores, conidia) ml⁻¹ obtained from the abovementioned liquid culture.

In one embodiment, after the incubation step (iii), an amount of the inoculated incubated seeds obtained by step iii) are placed inside the empty water-soluble capsule. For example, about 0.5 g of the inoculated incubated seeds, containing approximately 250 inoculated incubated seeds, is placed inside the empty water-soluble capsule.

In one embodiment, the capsule may contain also further nutrients in order to improve the germination of spores of the microfungus of the species *Verticillium dahliae.* Such nutrient may be a sugar, such as saccharose, in a concentration ranging from 30 to 50 mM

The water-soluble capsule according to the present invention can be advantageously provided in a kit in order to allow the preparation of a microbial suspension of the microfungus of the species *Verticillium dahliae* to be applied to the plant, which is intended to control, or to kill.

Therefore, object of the present invention is also a kit comprising the water-soluble capsule according to the present invention and a solvent. Preferably, said solvent is water, more preferably sterile distilled water.

In one embodiment said container in the kit is a vial (1) which comprises a reservoir (2), a sample holder capsule (3) and a chopper (4). The water-soluble capsules are placed in said sample holder capsule (3), which is positioned above the reservoir (2), and the solvent is placed in said reservoir. The sample holder capsule (3) is connected to a chopper (4), and the vial (1) is configured in such a way that, when adequate pressure is exerted on said chopper (4), the water-soluble capsules placed in the sample holder capsule (3) fall into the solvent inside said reservoir (2). This causes the water-soluble capsule to dissolve and to have an intimate contact of the inoculated seeds with the solvent, thereby allowing to prepare a microbial suspension of the microfungus. Dispersing the content of a capsule (containing seeds and the microfungus of the species *Verticillium dahliae*) in 10 ml water brings to a concentration of more about 10⁹ cfu.

Object of the present invention is also the use of the water-soluble capsule of the present invention or of the kit of the present invention as a mycoherbicide. In one embodiment, the use is in controlling or killing *Ailanthus altissima.*

Another object of the present invention is a method for the preparation of a water-soluble capsule according to the present invention, comprising the following steps:
i) providing a liquid culture of a microfungus of the species *Verticilium dahliae,*
ii) inoculation of said liquid culture of a microfungus of the species *Verticilium dahliae* to seeds of an herbaceous plant,
iii) incubation of said inoculated seed for at least 1 week, preferably at least 2 weeks. Preferably, the liquid culture of the microfungus of the species *Verticilium dahlia* is prepared with an incubation of said microfungus of the species *Verticilium dahlia* for at least 1 week or 2 weeks, at a temperature ranging from 20 to 25°C.

In one embodiment, said seeds of an herbaceous plant are sterilized seeds. The processes for sterilizing said seeds are known to the person skilled in the art.

The method also comprises a step of filling water-soluble empty capsules with the seeds prepared in step iii). The seeds can be provided as such or in the form of a powder.

In one embodiment the microfungus of the species *Verticilium dahliae* is the VdGL16 strain, accession number MK474459 deposited in GenBank.

In one embodiment the herbaceous plant is alfalfa, clover,

In one embodiment at the start of said incubation step iii), the microfungus of the species *Verticilium dahlie* is in a concentration of at least 1×10⁵ CFU/g of seeds, preferably ranging from 1×10⁵ CFU/g of seeds to 1×10⁷ CFU/g of seeds.

Objects of the present invention are also methods for controlling or killing *Ailanthus altissima* with the water-soluble capsule or with the kit of the present invention.

A first method is suitable for *Ailanthus altissima* plants having a trunk with a diameter of at least 4 cm, and comprises the following steps:
i) preparing a suspension of a microfungus of the species *Verticillium dahliae* with the kit according to the present invention or by dissolving in a solvent the water-soluble capsule according to the present invention,
ii) performing at least one hole in the trunk of said neophytes, preferably 2 or 3 holes,
iii) adding said suspension prepared in step i) in said hole.

Preferably the hole is performed by means of a drill, and at a height of about 50 cm from the ground and with a 6-7 mm drill bit, for a length of 2-3 cm, with a slight downward inclination. The hole can be therefore filled with about 2-3 ml of the microbial suspension prepared in step i), and may be closed, preferably with a cork with adequate dimensions. A second method which is suitable for *Ailanthus altissima* plants having a trunk with a diameter of at least 4 cm, comprises the following steps:
i) preparing a suspension of a microfungus of the species *Verticillium dahliae* with the kit according to the present invention or by dissolving in a solvent the water-soluble capsule according to the present invention,
ii) horizontal cutting of a stem,
iii) inserting a reservoir on the cut of step ii) comprising the suspension prepared in step i).

Preferably, the horizontal cutting of the stem in step ii) is performed at a low height (e.g. 50 cm) with pruning shears or loppers. The reservoir can be made of a bandage on the cut with single-sided biodegradable PLA adhesive tape, in which the microbial suspension prepared in step i) can be placed. It is also possible to use a strip of biodegradable plastic to form a sort of cup, fixed with a cable tie also made of bioplastic. For plants of very small dimensions and, in any case, more generally, it is possible to apply a rigid cardboard cylinder "at the head" of the stem of young specimens, herbaceous, or at the base of the petiole of a leaf of a tree of any size. The inoculum is then inserted into the protruding portion of the cylinder.

### EXAMPLES

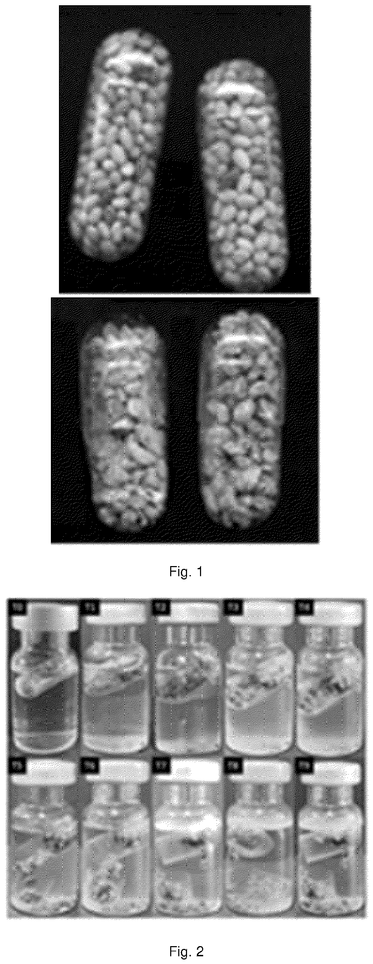

The fundamental and highly innovative element consists of a supplier system composed by microcapsule (21 mm long) in hydroxypropyl methylcellulose (HPMC) filled with alfalfa seeds inoculated with a liquid culture of the pathogenic microfungus *Verticillium dahliae* and kept in incubation for 2-3 weeks, after vigorous daily shaking (Fig. 1). The strain is deposited in GenBank as VdGL16 (accession no. MK474459).

The microcapsule shell immersed in water dissolves very quickly, releasing the contents (Fig. 2)

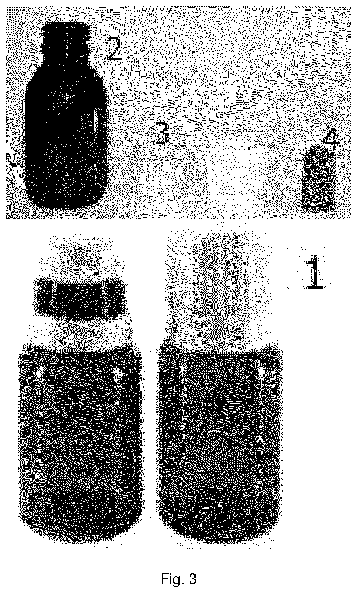

The kit includes a plastic container (PET) of various capacities (e.g. 50-200 ml) complete with measuring cap (Fig. 3) (also easily available on the market). In short: insert the HPMC capsule(s) containing the alfalfa seeds colonized by the microfungus into the sample capsule. The material is ready to be stored in the fridge for up to six months. At the time of treatment, the chopper is pressed, and the capsule is dropped into the liquid below (sterile distilled water). After vigorous stirring for a few minutes, the suspension is ready for use.

There are different methods of applying the suspension thus obtained to the ailanthus tree, depending above all on the size of the plant and some logistical aspects. In particular:
A. In the case of trees with a diameter of at least 4-8 cm, the recommended method is to drill a hole at a height of 50 cm from the ground with a 6-7 mm drill bit (supplied in the kit), for a length of 2-3 cm, with a slight downward inclination, and fill the space thus formed with 2-3 ml of microbial suspension taken from the container with a plastic micropipette (supplied in the kit). The hole is then closed with a mini cork (supplied in the kit). No subsequent intervention is necessary. For specimens of particularly large dimensions, it is advisable to drill at least 2-3 holes, using the same methods.
B. For plants with dimensions smaller than those reported in A., and, in any case, if a drill is not available to make holes in the trunk, the microbial suspension can be inoculated with alternative methods, such as **(****Fig. 4****):**
   B₁. Horizontal cutting of the stem at a low height with pruning shears or loppers and application of the bandage on the cut with single-sided biodegradable polylactic acid (PLA) adhesive tape, height 5 cm (supplied in the kit). Inside this volume, insert 2-3 ml of microbial suspension taken as described in a. Alternatively, it is possible to use a strip of biodegradable plastic to form a sort of cup, fixed with a cable tie also made of bioplastic (both supplied in the kit).
   B₂. For plants of very small dimensions and, in any case, more generally, it is possible to apply a rigid cardboard cylinder (diameter 1 cm, length 4-5 cm - commercially available and supplied in the kit) "at the head" of the stem of young specimens, herbaceous, or at the base of the petiole of a leaf of a tree of any size. To facilitate the insertion of the cylinder, simply reshape the cutting profile with a cutter by applying light pressure. The inoculum is then inserted into the protruding portion of the cylinder, as provided in a. No subsequent intervention is necessary.

## Claims

1. A water-soluble capsule comprising seeds of an herbaceous plant inoculated with a liquid culture of a microfungus of the species *Verticillium dahliae.*

2. The water-soluble capsule according to claim 1, wherein said microfungus of the species *Verticillium dahliae* is the VdGL16 strain, accession number MK474459 deposited in GenBank.

3. The water-soluble capsule according to any one of claims 1 or 2, wherein said herbaceous plant is alfalfa, clover, millet.

4. The water-soluble capsule according to any one of claims 1 to 3, wherein said capsule comprises a water-soluble polymer, preferably cellulose or a derivative thereof, more preferably hydroxypropyl methylcellulose (HPMC).

5. The water-soluble capsule according to any one of claims 1 to 4, wherein said seeds of an herbaceous plant inoculated with said liquid culture of the microfungus of the species *Verticillium dahliae* have been incubated for at least 1 week, preferably at least 2 weeks

6. The water-soluble capsule according to claim 5, wherein at the start of said incubation, said microfungus of the species *Verticilium dahlie* is in a concentration of at least 1×10⁵ CFU/g of seeds, preferably ranging from 1×10⁵ CFU/g of seeds to 1×10⁷ CFU/g of seeds.

7. The water-soluble capsule according to any one of claims 1 to 6, further comprising a sugar, preferably saccharose in a concentration ranging from 30 to 50 mM.

8. A kit comprising the water-soluble capsule according to any one of claims 1 to 7, a solvent and a container (1).

9. The kit according to claim 8, wherein said solvent is water, preferably sterile distilled water.

10. The kit according to any one of claims 8 or 9, wherein said container is a vial (1) comprising a reservoir (2), a sample holder capsule (3), and a chopper (4).

11. The kit according to claim 10, wherein said water-soluble capsule are placed in said sample holder capsule (3), and said solvent is placed in said reservoir (2).

12. The kit according to any one of claim 10 or 11, wherein said vial (1) is configured in such a way that when adequate pressure is exerted on said chopper (4), said water-soluble capsules from the sample holder capsule (3) fall into the solvent inside said reservoir (2).

13. Use of the water-soluble capsule according to any one of claims 1 to 7, or of the kit according to any one of claims 8 to 12, as a mycoherbicide.

14. The use according to claim 13, for controlling or killing *Ailanthus altissima.*

15. A method for the preparation of a water-soluble capsule according to any one of claims 1 to 7, comprising the following steps:
i) providing a liquid culture of a microfungus of the species *Verticillium dahliae,*
ii) inoculation of said liquid culture of a microfungus of the species *Verticillium dahliae* to seeds of an herbaceous plant,
iii) incubation of said inoculated seed for at least 1 week, preferably at least 2 weeks.

16. The method according to claim 15, wherein said microfungus of the species *Verticilium dahliae* is the VdGL16 strain, accession number MK474459 deposited in GenBank.

17. The method according to any one of claims 15 or 16, wherein said herbaceous plant is alfalfa, clover, millet.

18. The method according to any one of claims 15 to 17, wherein at the start of said incubation, said microfungus of the species *Verticillium dahliae* is in a concentration of at least 1×10⁵ CFU/g of seeds, preferably ranging from 1×10⁵ CFU/g of seeds to 1×10⁷ CFU/g of seeds

19. A method for controlling or killing *Ailanthus altissima,* wherein the trunk of said *Ailanthus altissima* has a diameter of at least 4 cm, comprising the following steps:
i) preparing a suspension of a microfungus of the species *Verticillium dahliae* with the kit according to any one of claims 8 to 12 or by dissolving in a solvent the water-soluble capsule according to any one of claims 1 to 7,
ii) performing at least one hole in the trunk of said neophytes, preferably 2 or 3 holes,
iii) adding said suspension prepared in step i) in said hole.

20. A method for controlling or killing *Ailanthus altissima,* wherein the trunk of said *Ailanthus altissima* has a diameter of less than 4 cm, comprising the following steps:
i) preparing a suspension of a microfungus of the species *Verticillium dahliae* with the kit according to any one of claims 8 to 12 or by dissolving in a solvent the water-soluble capsule according to any one of claims 1 to 7,
ii) horizontal cutting of a stem,
iii) inserting a reservoir on the cut of step ii) comprising the suspension prepared in step i) .

## Amended claims

### Amended claims in accordance with Rule 137(2) EPC.

1. A water-soluble capsule comprising seeds of an herbaceous plant inoculated with a liquid culture of a microfungus of the species *Verticillium dahliae.*

2. The water-soluble capsule according to claim 1, wherein said microfungus of the species *Verticillium dahliae* is the VdGL16 strain, accession number MK474459 deposited in GenBank.

3. The water-soluble capsule according to any one of claims 1 or 2, wherein said herbaceous plant is alfalfa, clover, millet.

4. The water-soluble capsule according to any one of claims 1 to 3, wherein said capsule comprises a water-soluble polymer, preferably cellulose or a derivative thereof, more preferably hydroxypropyl methylcellulose (HPMC).

5. The water-soluble capsule according to any one of claims 1 to 4, wherein said seeds of an herbaceous plant inoculated with said liquid culture of the microfungus of the species *Verticillium dahliae* are obtainable by incubating said seeds inoculated with said microfungus of the species *Verticilium dahliae* for at least 1 week, preferably at least 2 weeks

6. The water-soluble capsule according to claim 5, wherein at the start of said incubation, said microfungus of the species *Verticilium dahlie* is in a concentration of at least 1x10⁵ CFU/g of seeds, preferably ranging from 1x10⁵ CFU/g of seeds to 1x10⁷ CFU/g of seeds.

7. The water-soluble capsule according to any one of claims 1 to 6, further comprising a sugar, preferably saccharose in a concentration ranging from 30 to 50 mM.

8. A kit comprising the water-soluble capsule according to any one of claims 1 to 7, a solvent and a container (1).

9. The kit according to claim 8, wherein said solvent is water, preferably sterile distilled water.

10. The kit according to any one of claims 8 or 9, wherein said container is a vial (1) comprising a reservoir (2), a sample holder capsule (3), and a chopper (4).

11. The kit according to claim 10, wherein said water-soluble capsule are placed in said sample holder capsule (3), and said solvent is placed in said reservoir (2).

12. The kit according to any one of claim 10 or 11, wherein said vial (1) is configured in such a way that when adequate pressure is exerted on said chopper (4), said water-soluble capsules from the sample holder capsule (3) fall into the solvent inside said reservoir (2).

13. Use of the water-soluble capsule according to any one of claims 1 to 7, or of the kit according to any one of claims 8 to 12, as a mycoherbicide.

14. The use according to claim 13, for controlling or killing *Ailanthus altissima.*

15. A method for the preparation of a water-soluble capsule according to any one of claims 1 to 7, comprising the following steps:
i) providing a liquid culture of a microfungus of the species *Verticillium dahliae,*
ii) inoculation of said liquid culture of a microfungus of the species *Verticillium dahliae* to seeds of an herbaceous plant,
iii) incubation of said inoculated seed for at least 1 week, preferably at least 2 weeks.

16. The method according to claim 15, wherein said microfungus of the species *Verticilium dahliae* is the VdGL16 strain, accession number MK474459 deposited in GenBank.

17. The method according to any one of claims 15 or 16, wherein said herbaceous plant is alfalfa, clover, millet.

18. The method according to any one of claims 15 to 17, wherein at the start of said incubation, said microfungus of the species *Verticillium dahliae* is in a concentration of at least 1x10⁵ CFU/g of seeds, preferably ranging from 1x10⁵ CFU/g of seeds to 1x10⁷ CFU/g of seeds

19. A method for controlling or killing *Ailanthus altissima,* wherein the trunk of said *Ailanthus altissima* has a diameter of at least 4 cm, comprising the following steps:
i) preparing a suspension of a microfungus of the species *Verticillium dahliae* with the kit according to any one of claims 8 to 12 or by dissolving in a solvent the water-soluble capsule according to any one of claims 1 to 7,
ii) performing at least one hole in the trunk of said neophytes, preferably 2 or 3 holes,
iii) adding said suspension prepared in step i) in said hole.

20. A method for controlling or killing *Ailanthus altissima,* wherein the trunk of said *Ailanthus altissima* has a diameter of less than 4 cm, comprising the following steps:
i) preparing a suspension of a microfungus of the species *Verticillium dahliae* with the kit according to any one of claims 8 to 12 or by dissolving in a solvent the water-soluble capsule according to any one of claims 1 to 7,
ii) horizontal cutting of a stem,
iii) inserting a reservoir on the cut of step ii) comprising the suspension prepared in step i).
